# EUROPÄISCHE PATENTSCHRIFT

(11) **EP 0 800 018 B1**
(45) Veröffentlichungstag und Bekanntmachung des Hinweises auf die Patenterteilung: **21.06.2000**
(21) Anmeldenummer: 97103856.7
(22) Anmeldetag: 07.03.1997
(51) Int. Cl.: F16G 5/18

(54) **Laschenkette für stufenlos übersetzungseinstellbare Kegelscheibengetriebe**
Chain for continuously variable conical pulleys transmission
Chaîne pour transmission continuement variable à poulies coniques

(30) Priorität: 03.04.1996 DE 19613368
(43) Veröffentlichungstag der Anmeldung: 08.10.1997
(73) Patentinhaber: CVT Verwaltungs GmbH & Co. Patentverwertungs KG, 61352 Bad Homburg (DE)
(72) Erfinder:
(74) Vertreter: Lemcke, Rupert, Dipl.-Ing.

(56) Entgegenhaltungen:
- DE-A- 3 447 092
- DE-B- 1 065 685
- DE-B- 1 119 065
- DE-B- 1 302 795
- DE-B- 2 356 289
- DE-B- 2 848 166
- DE-B- 3 027 834

## Beschreibung

Die Erfindung betrifft eine Laschenkette für stufenlos übersetzungseinstellbare Kegelscheibengetriebe nach dem Oberbegriff des Anspruches 1.

In diesem Zusammenhang haben die Kegelscheibengetriebe in der Regel auf jeder ihrer Wellen Paare von Kegelscheiben mit balliger Reibfläche. Eingeschlossen sein sollen jedoch auch solche Getriebe, bei denen die auf jeder der Wellen angeordneten Scheibenpaare einen assymetrischen Scheibenkeil bilden, indem eine der Scheiben sich praktisch in Radialrichtung erstreckt.

Was die genannte Laschenkette betrifft, so sind dafür mannigfache Formen beispielsweise durch die DE-C-10 65 685, DE-C-11 19 065, DE-C-13 02 795, DE-C-23 56 289 oder DE-A-30 27 834 bekannt. Aus diesen Druckschriften ergibt sich auch, daß die Ketten im Zweilaschenverband oder im Dreilaschenverband aufgebaut sein können, siehe hierzu beispielsweise die Figuren 2 und 3 aus DE-A-30 27 834.

Soweit beim Gegenstand der vorstehend umrissenen Art die balligen Stirnflächen der Wiegestücke mit ebenso ballig ausgebildeten Reibflächen von Kegelscheiben zusammenwirken, wird die gewölbte Ausführung der Kegelscheiben bekanntlich angewendet, um bei derartigen Getrieben den sogenannten Spurversatz, das heißt das Schräglaufen der Laschenkette zu verhindern, das sich aus den geometrischen Gegebenheiten bei Kegelscheiben mit anderen Mantellinien der Reibflächen bei Übersetzungsänderungen ergibt. Dabei haben die mit derart gewölbten Kegelscheiben bei der Reibkraftübertragung zusammenwirkenden Stirnflächen der Wiegestücke üblicherweise radial zur Laufrichtung gesehen kreisbogenförmige Mantellinien und es liegen die aus diesen Mantellinien gebildeten Stirnflächen senkrecht zur Längserstreckung bzw. Achse der Wiegestücke, die ihrerseits jeweils parallel zu den Getriebeachsen liegt.

Für diese Paarung aus im wesentlichen kreisbogenförmig gewölbten Reibflächen der Kegelscheiben und kreisbogenförmig gewölbten Stirnflächen der Wiegestücke hat sich nun gezeigt, daß die Stirnflächen der Wiegestücke über die verschiedenen Übersetzungsstellungen des Getriebes gesehen unterschiedlich tragen, wobei es gerade in Richtung auf die beiden extremen Übersetzungsstellungen zu einem sogenannten Kantentragen der Wiegestückstirnflächen kommen kann, indem die Stirnflächen der Wiegestücke in Umlaufrichtung der Laschenkette gesehen entweder nur im Bereich der einen oder im Bereich der anderen Grenze ihrer Fläche in Kontakt mit der Reibfläche der zugeordneten Kegelscheibe stehen. Dadurch ergibt sich jedoch eine hohe spezifische Pressung an den Kontaktstellen zwischen Kegelscheiben und Wiegestücken, so daß es, insbesondere bei Hochleistungsgetrieben, zu einem lokal überhöhten Verschleiß der Wiegestückstirnflächen und sogenannter Grübchenbildung kommt, andererseits bei den Kegelscheiben zur Bildung von Rillen und/oder Graufleckigkeit. Daraus ergibt sich jedoch auch eine Vergrößerung der sich berührenden Flächen und damit die Gefahr eines hydrodynamischen Durchrutschens mit den bekannten negativen Folgen. Siehe hierzu im einzelnen die DE-A-34 47 092, die als gattungsgemäß angesehen werden kann.

Aufgabe der Erfindung ist es daher, eine Laschenkette der eingangs genannten Art durch Gestaltung der Reibkontaktstellen derart auszubilden, daß einem Kantentragen der Wiegestückstirnflächen begegnet ist und sich folglich ein Höchstmaß an Reibwertstabilität über den gesamten Übersetzungsbereich des Getriebes und damit eine Leistungssteigerung in Folge Schaffung günstigerer Anpreßverhältnisse ergibt.

Diese Aufgabe ist, ausgehend von einer Laschenkette der eingangs genannten Art, erfindungsgemäß durch die kennzeichnenden Merkmale des Anspruches 1 gelöst.

Durch diese erfindungsgemäßen Maßnahmen ist erreicht, daß für den radial äußeren Bereich der Wiegestückstirnflächen, der bei kleinen Laufradien zwischen den Kegelscheiben wirksam und dadurch vergleichsweise am höchsten belastet ist, die tragende Kontaktstelle der jeweiligen Wiegestückstirnfläche von ihrer gemeinsamen Kante mit der sich anschließenden Wiegefläche in Richtung auf die in Umlaufrichtung gegenüberliegenden Kante der Wiegestückstirnfläche weggerückt ist. Dadurch liegt die Kontaktstelle mehr im Bereich zwischen den beiden genannten Kanten und ist über ihren gesamten Umfang von Wiegestückmaterial umgeben, das nicht direkt einer kontaktbedingten Pressung durch die Reibfläche der zugeordneten Kegelscheibe ausgesetzt ist. Damit ergibt sich für die hochbeanspruchte Kontaktstelle eine allseitige Abstützung durch Wiegestückmaterial, so daß sich die Kontaktstelle über ihren Querschnitt gleichmäßig verformen kann. Ein übermäßiger Verschleiß einer aus geometrischen Gründen verkleinerten und damit überbeanspruchten Kontaktstelle ist dadurch also verhindert.

Die erfindungsgemäßen Maßnahmen lassen sich bei der Herstellung der Wiegestücke ohne weiteres verwirklichen, so daß sie hinsichtlich der Gestehungskosten nicht besonders ins Gewicht fallen, insbesondere im Hinblick darauf, daß nunmehr eine wesentlich größere Leistungsfähigkeit und Lebensdauer der Laschenkette erreicht werden kann.

Als zweckmäßig hat es sich erwiesen, daß die Verschwenkung von 0 beginnend bis auf einen Betrag im Bereich von 2° nach radial außen hin zunimmt. Diese an sich geringe Winkelabweichung der Stirnfläche von den bisher üblichen Bauformen hat sich als ausreichend erwiesen, um das Ziel der Erfindung zu erreichen.

In Weiterbildung können die Merkmale des Anspruches 3 vorgesehen werden. Auf diese Weise ist auch für den Teil der Wiegestückstirnflächen, die zu den größeren Laufradien zwischen den Scheibenpaaren gehören, eine erhebliche Verbesserung erreicht, so daß nunmehr der Wiegestückstirnfläche über den gesamten Übersetzungsbereich des Getriebes ein bestmögliches Tragverhalten gegeben ist. Hinsichtlich der Wirkung dieser erfindungsgemäßen Maßnahmen gelten die vorstehend gemachten Ausführungen sinngemäß unter Berücksichtigung des Umstandes, daß bei dem für die größeren Laufradien zuständigen Stirnflächenabschnitt die Kontaktstellen mehr an der Kante der Wiegestückstirnfläche liegen, die der gemeinsamen Kante zwischen Stirnfläche und Wiegefläche gegenüberliegt.

Weitere Merkmale und Einzelheiten ergeben sich aus der nachfolgenden Beschreibung einer Ausführungsform, die in der Zeichnung dargestellt ist. Dabei zeigen:
- Figur 1: ein bekanntes, hydraulisch gesteuertes Kegelscheibengetriebe;
- Figur 2: eine vereinfachte Darstellung des Getriebes gemäß Figur 1 mit balligen Reibflächen der Kegelscheiben und balligen Stirnflächen der Wiegestücke;
- Figur 3: die Seitenansicht einer Laschenkette mit gelenkbildenden Wiegestückpaaren;
- Figur 4: eine vergrößerte Ausschnittdarstellung der Paarung zwischen der Reibfläche einer Kegelscheibe und der Stirnfläche eines Wiegestückes;
- Figur 5: die Ansicht des Gegenstandes gemäß Figur 4 von links gesehen mit verschiedenen Schwenklagen eines Wiegestückes;
- Figur 6: die Radialansicht des Gegenstandes der Figuren 4 und 5 ausschnittweise mit den Schwenklagen des Wiegestückes gemäß Figur 5 und
- Figur 7: in vergrößerter und perspektivischer Ausschnittdarstellung das Ende eines Wiegestückes mit erfindungsgemäß abgewandelter Stirnfläche.

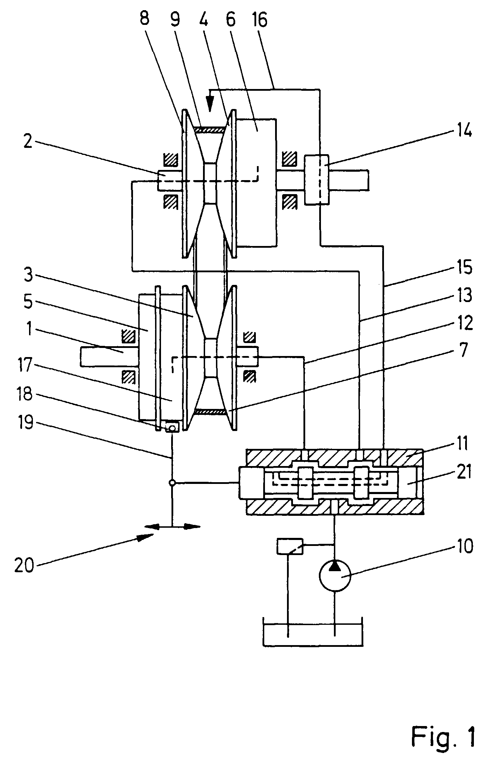

Gemäß Figur 1 weist ein bekanntes Getriebe mit hydraulisch verstellbaren Kegelscheiben eine Antriebswelle 1 und eine Abtriebswelle 2 auf, auf denen zur Einstellung und Aufrechterhaltung der Getriebeübersetzung axial verschiebbare Kegelscheiben 3, 4 angeordnet sind, die Zylinder-Kolben-Aggregate 5, 6 bilden, während ihnen jeweils gegenüber fest abgestützte Kegelscheiben 7, 8 angeordnet sind. Zwischen den jeweiligen Kegelscheibenpaaren läuft eine Laschenkette 9 aus Stahlgliedern um.

Den Zylinder-Kolben-Aggregaten 5, 6 wird das von einer Druckmittelquelle 10 bezogene Druckmittel über einen Vierkanten-Steuerschieber 11 und jeweilige Leitungen 12, 13 zugeteilt. Außerdem sitzt auf der Abtriebswelle 2 ein Drehmomentfühler 14, dem über eine Leitung 15 das von dem Steuerschieber 11 abfließende Druckmittel zugeführt wird, welches drehmomentabhängig gedrosselt wird und den Druck am Antrieb (Zylinder-Kolben-Aggregat 5) bestimmt. Vom Drehmomentfühler 14 aus fließt das Druckmittel über eine Leitung 16 drucklos auf die Laschenkette 9 zu deren Beölung und Kühlung ab.

Der Zylinder 5 hat eine Umfangsnut 17, an der über einen Gleitstein 18 der Hebel 19 eines Übersetzungsstellgliedes 20 angelenkt ist. Zwischen Stellglied 20 und Gleitstein 18 ist an den Hebel 19 außerdem der Schieber 21 des Vierkanten-Steuerschiebers drehbar angelenkt.

Die Funktionsweise dieses Getriebes wird nicht noch einmal erläutert, da sie allgemein bekannt ist.

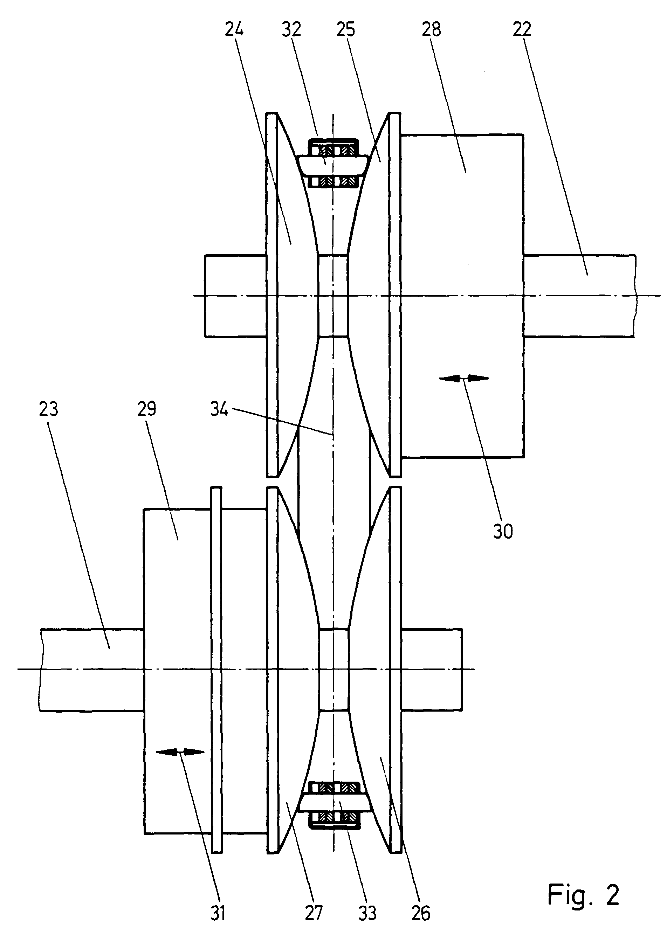

Gemäß Figur 2 sind bei einem Getriebe der allgemein anhand der Figur 1 geschilderten Art auf Wellen 22, 23 Kegelscheiben 24 bis 27 drehfest angeordnet, wobei die Kegelscheiben 24 und 26 axial fest abgestützt sind, während die Kegelscheiben 25 und 27, die Zylinder-Kolben-Aggregate 28, 29 bilden, entsprechend den Pfeilen 30, 31 drehfest aber axial verschiebbar sind. Zwischen den Kegelscheiben läuft eine Stahlgliederkette um, die in der neutralen Übersetzungsstellung 1:1 durch Wiegestücke 32, 33 und die ihre Mitte verbindende Spurlinie 34 dargestellt ist.

Wie aus Figur 2 ersichtlich, sind die Reibflächen der Kegelscheiben 24 bis 27 mit einer im wesentlichen kreisbogenförmigen Mantelfläche versehen, während die Stirnflächen der Wiegestücke 32, 33 ebenfalls eine im wesentlichen kreisbogenförmige Mantelfläche aufweisen.

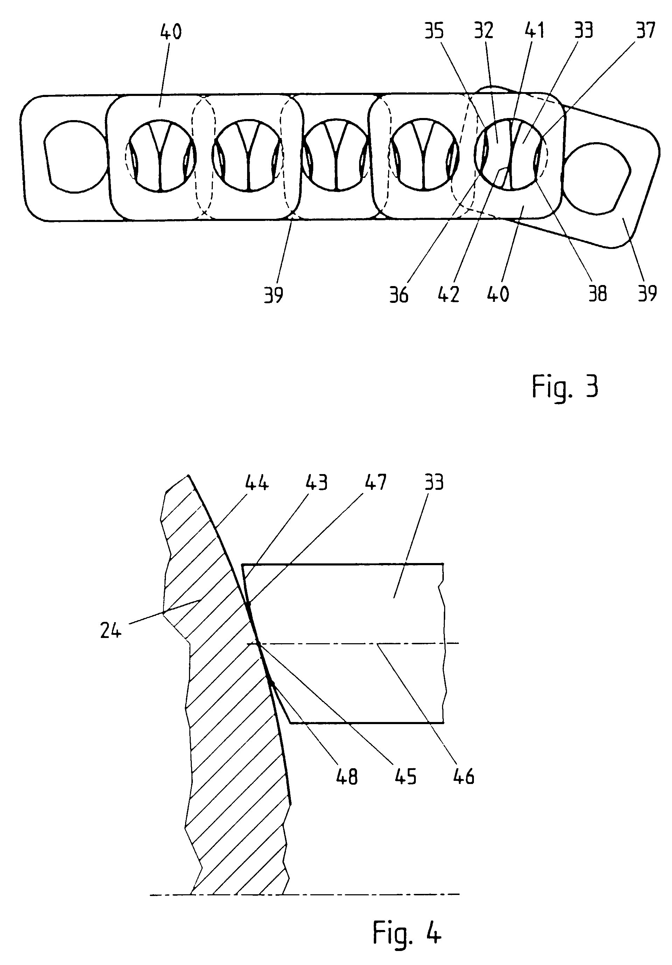

Die Kette 9 mit gelenkbildenden Paaren von Wiegestücken 32, 33 ist in Figur 3 ausschnittweise und vergrößert in Seitenansicht dargestellt. Dabei haben die Wiegestücke 32, 33 eine solche Gestalt, daß sie an zwei Stellen 35, 36 bzw. 37, 38 an der Laschenaussparung der jeweils zugeordneten Lasche 39 bzw. 40 anliegen und dabei gegenüber dieser zugeordneten Lasche gegen Drehen gesichert sind.

Die gegenseitige gelenkbildende Abstützung der Wiegestücke 32, 33 geschieht über im wesentlichen konvex gewölbte Wiegeflächen 41, 42, über die die Wiegestücke 32, 33 aufeinander abrollen, wenn die Kettenlaschen 39, 40 von ihrer geradlinig miteinander fluchtenden Stellung in die dargestellte, einen gegenseitigen Winkel einschließende Stellung verschwenkt werden. Eine solche, zwischen dem geradlinigem Verlauf der Kette und einem Verlauf der Kette mit gegenseitig abgewinkelten Laschen, hin- und hergehende Bewegung machen die einzelnen Kettenglieder jeweils beim Einlaufen in den von zwei zusammengehörenden Kegelscheiben gebildeten Keil durch. Dabei nehmen benachbarte Wiegestücke 32, 33 eine andere Schwenkstellung ein, die je nach dem Laufkreisradius zwischen den Kegelscheibenpaaren unterschiedlich ist.

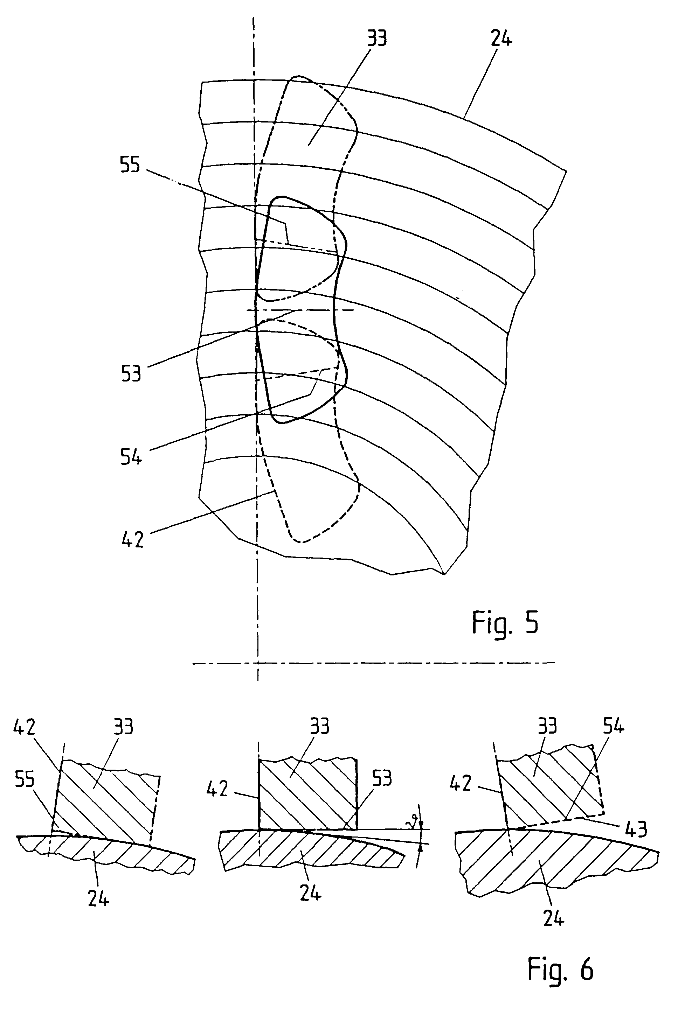

Figur 4 zeigt in vergrößerter Ausschnittdarstellung aus Figur 2 die Paarung zwischen einem Wiegestück 33 mit einer im wesentlichen kreisbogenförmig gewölbten Stirnfläche 43 mit der im wesentlichen kreisbogenförmig gewölbten Reibfläche 44 der Kegelscheibe 24. Hier ist ersichtlich, daß sich die beiden Bauteile an der Kontaktstelle 45 berühren, wobei die Stirnfläche 43 so gewölbt ist, daß ihre in Radialrichtung der Kegelscheibe 24 parallel nebeneinander liegenden Höhenlinien senkrecht zur Längserstreckung bzw. Achse 46 des Wiegestückes 33 liegen.

Mit 47 und 48 sind zwei weitere denkbare Kontaktstellen bezeichnet, wobei die Kontaktstelle 47 zu einem kleineren Laufkreisradius an der Kegelscheibe 24 und die Kontaktstelle 48 zu einem größeren Laufkreisradius gehört.

Figur 5 zeigt den Gegenstand gemäß Figur 4 bezogen auf Figur 4 von links durch die durchsichtig gedachte Kegelscheibe 24 gesehen. Dabei sind in Figur 5 drei zu verschiedenen Übersetzungsstellungen des Getriebes gehörende Schwenkstellungen eines stark vergrößert dargestellten Wiegestückes 33 gezeigt, wobei die durchgehend gezeichnete Wiegestückkontur einer mittleren Übersetzungsstellung des Getriebes entsprechen mag, während die strichpunktiert gezeichnete Stellung zu einem größeren Laufkreisradius und die gestrichelt gezeichnete Stellung zu einem kleineren Laufkreisradius gehört.

Zu diesen drei Schwenkstellungen des Wiegestückes 33 gemäß Figur 5 zeigt Figur 6 nebeneinander die Paarung zwischen Kegelscheibe 24 und Wiegestück 33 in annähernd radialer Draufsicht jeweils senkrecht zu den Linien 53, 54 bzw.55, wobei den Linien 55, 53 und 54 in radialer Sicht ein größerer, mittlerer und kleinerer Krümmungsgrad der Kegelscheibe 24 entspricht. Hierbei ist 53 eine Höhenlinie bzw Stirnflächenlinie durch die Kontaktstelle 45. Die Linien 54 bzw.55 sind Höhenlinien durch die dortigen Kontaktstellen 47 bzw. 48. Hier ist aus der linken, einem größeren Laufradius entsprechenden Darstellung ersichtlich, daß die Stirnfläche 43 des Wiegestückes 33 näher im Bereich der der Wiegefläche 41 gegenüberliegenden Außenkante trägt. Bei der mittleren, der durchgehend gezeichneten Position in Figur 5 entsprechenden Stellung trägt die Stirnfläche 43 des Wiegestückes 33 bereits nahe der Wiegefläche 41, während bei der rechten, einem kleineren Laufradius entsprechenden Darstellung die Stirnfläche 43 des Wiegestückes 33 ganz an der mit der Wiegefläche 41 gemeinsamen Kante trägt. Vor allem die linke und die rechte Darstellung veranschaulichen - allerdings in stark übertriebener Darstellung - , daß an der Stirnfläche 43 des Wiegestücks 33 jeweils nur ein verhältnismäßig kleiner Flächenabschnitt zur Reibkraftübertragung zur Verfügung steht, der dann entsprechend auch besonders hoch belastet wird.

Um dem zu begegnen, wird der Verlauf der Stirnfläche 43 erfindungsgemäß dadurch abgeändert, daß die zur jeweiligen Kontaktstelle gehörende und zum zugeordneten Laufkreis an der Kegelscheibe 24 im wesentlichen tangentiale, aus Figur 6 ersichtliche Stirnflächenlinie um einen Winkel θ derart geschwenkt wird, daß die Kontaktstellen von der rechten bzw. linken Kante des Wiegestückes 33 fort näher zu dessen Mitte verschoben werden.

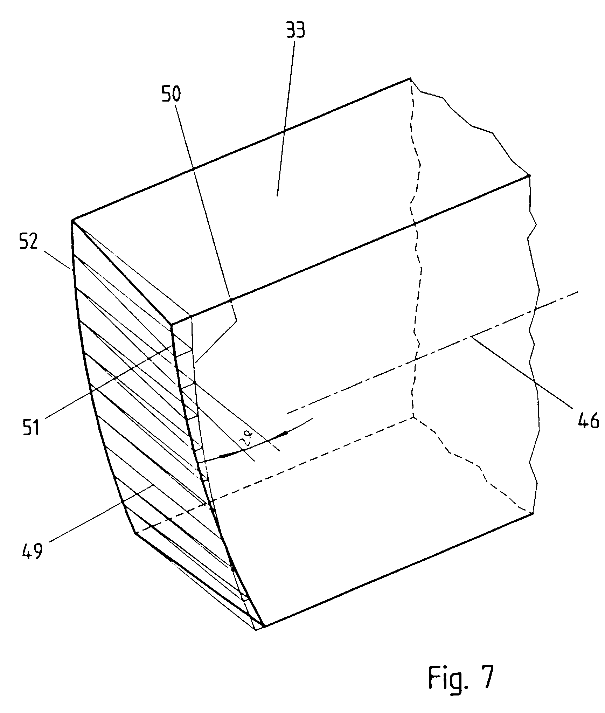

Dabei ergibt sich in Radialrichtung gesehen ein Stirnflächenverlauf, wie er perspektivisch in Figur 7 dargestellt ist. Figur 7 zeigt, daß bei der Linie 49, die etwa zur Übersetzungsstellung 1:1 gehört, keine Verschwenkung gegenüber der Senkrechten zur Längsachse 46 des Wiegestückes 33 vorgenommen ist. Davon ausgehend nimmt die Verschwenkung in Richtung auf die nicht dargestellte Kegelscheibe nach radial außen zu, also über den Bereich, der bei gegenüber der Linie 49 kleineren Laufradien zum Einsatz kommt. Umgekehrt ist von der Linie 49 ausgehend nach radial innen eine negative Verschwenkung vorhanden über den Bereich, der für größere Laufradien zum Tragen kommt. Insgesamt entsteht so gegenüber dem bekannten, mit der Ziffer 50 versehenen Stirnflächenverlauf erfindungsgemäß der mit der Ziffer 51 versehene Stirnflächenverlauf ausgehend von der gemeinsamen Kante 52 mit der sich anschließenden Wiegefläche, der sicherstellt, daß die jeweiligen Kontaktflächen immer etwa im mittleren Bereich zwischen den in Laufrichtung der Kette außenliegenden Kanten der Wiegestücke liegen.

## Patentansprüche

1. Laschenkette für stufenlos übersetzungseinstellbare Kegelscheibengetriebe, deren die einzelnen Kettenglieder verbindenden Gelenkstücke als Paare von in Aussparungen der Laschen (39, 40) eingeschobenen Wiegestücken (32, 33) mit aufeinander abgestützten Wiegeflächen (41, 42) ausgebildet sind, wobei die Wiegestücke mit den ihrem Kettenglied zugehörenden Laschen über eine Drehsicherung (35, 36 bzw. 37, 38) verbunden sind, wobei die der jeweiligen Kegelscheibe (24 - 27) zugewandten Stirnflächen (43) der Wiegestücke (32, 33) die Reibkräfte zwischen Kegelscheiben und Laschenkette übertragen, und wobei die Reibflächen (44) der Kegelscheiben (24 - 27) und die Stirnflächen (43) der Wiegestücke (32, 33) eine einem bogenförmigen Verlauf entsprechende, aufeinander zu gerichtete Balligkeit aufweisen,
dadurch gekennzeichnet,
daß, ausgehend von einer zur Laufrichtung parallel gelegenen Stirnflächenlinie (49, 53), die etwa auf der radialen Höhe der Übersetzungsstellung von 1:1 liegt, die weiteren nach radial außen anschließenden Stirnflächenlinien (54), die die räumlich gekrümmte Stirnfläche (43) der Wiegestücke (32, 33) beschreiben, zunehmend um ihren Schnittpunkt mit der Wiegefläche (41, 42) in Richtung auf die zugeordnete Kegelscheibe um einen Winkel ϑ verschwenkt sind.

2. Laschenkette nach Anspruch 1,
dadurch gekennzeichnet,
daß die Verschwenkung von 0 beginnend bis auf einen Betrag im Bereich von 2° nach radial außen hin zunimmt.

3. Laschenkette nach Anspruch 1 oder 2,
dadurch gekennzeichnet,
daß, ausgehend von einer zur Laufrichtung parallel gelegenen Stirnflächenlinie (49, 53), die etwa auf der radialen Höhe der Übersetzungsstellung von 1:1 liegt, die weiteren nach radial innen anschließenden Stirnflächenlinien (55), die die räumlich gekrümmte Stirnfläche (43) beschreiben, zunehmend um ihren Schnittpunkt mit der Wiegefläche (41, 42) in Richtung von der zugeordneten Kegelscheibe fort um einen Winkel (ϑ) verschwenkt sind.

4. Laschenkette nach Anspruch 3,
dadurch gekennzeichnet,
daß die Verschwenkung von 0 beginnend bis auf einen Betrag im Bereich von 2° nach radial innen hin zunimmt.

5. Laschenkette nach Anspruch 1,
dadurch gekennzeichnet,
daß die Wiegeflächen (41, 42) der Wiegestücke (32, 33) im wesentlichen konvex ausgebildet sind.

6. Laschenkette nach Anspruch 1,
dadurch gekennzeichnet,
daß die Drehsicherung (35, 36 bzw. 37, 38) formschlüssige Drehsicherung ist.

## Claims

1. Plate-link chain for continuously variable conical pulley gearing, whose hinge pieces, which connect the individual chain links, are formed as pairs of rocker pieces (32, 33), which are inserted in openings in the plates (39, 40), with rocker faces (41, 42) supported on one another, wherein the rocker pieces are connected to the plates associated with their chain link via an anti-rotation mechanism (35, 36 and 37, 38, respectively), wherein the end faces (43), which are turned towards the respective conical pulley (24 - 37), of the rocker pieces (32, 33) transmit the frictional forces between the conical pulleys and the plate-link chain, and wherein the frictional faces (44) of the conical pulleys (24 - 27) and the end faces (43) of the rocker pieces (32, 33) exhibit cambers corresponding to an arcuate path and directed towards one another,
characterised in that, starting from an end face line (49, 53) which is disposed parallel to the running direction and which lies approximately at the radial height of the transmission position of 1:1, the other end face lines (54) which follow radially outwards and describe the three-dimensionally curved end face (43) of the rocker pieces (32, 33) are increasingly pivoted about their point of intersection with the rocker face (41, 42) in the direction of the associated conical pulley through an angle θ.

2. Plate-link chain according to Claim 1,
characterised in that the pivoting increases radially outwards from 0 to a value in the range of 2°.

3. Plate-link chain according to Claim 1 or 2,
characterised in that, starting from an end face line (49, 53) which is disposed parallel to the running direction and which lies approximately at the radial height of the transmission position of 1:1, the other end face lines (55) which follow radially inwards and describe the three-dimensionally curved end face (43) are increasingly pivoted about their point of intersection with the rocker face (41, 42) in the direction of the associated conical pulley through an angle (θ).

4. Plate-link chain according to Claim 3, characterised in that the pivoting increases radially inwards from 0 to a value in the range of 2°.

5. Plate-link chain according to Claim 1, characterised in that the rocker faces (41, 42) of the rocker pieces (32, 33) are substantially convex.

6. Plate-link chain according to Claim 1, characterised in that the anti-rotation mechanism (35, 36 and 37, 38, respectively) is a mating anti-rotation mechanism.

## Revendications

1. Chaîne articulée à plaques pour changements de vitesse ou transmissions à disques coniques et rapport de transmission variable en continu, dont les pièces d'articulation reliant les différents maillons de la chaîne sont réalisées comme des paires de pièces à bascule (32, 33) introduites dans des évidements des plaques (39, 40) et présentant des surfaces à bascule (41, 42) appuyées l'une sur l'autre, les pièces à bascule étant reliées aux plaques appartenant à leur maillon de chaîne par un dispositif de blocage en rotation (35, 36 respectivement 37, 38), les faces extrêmes (43) des pièces à bascule (32, 33) dirigées vers le disque conique (24-27) coordonné transmettant les forces de frottement entre les disques coniques et la chaîne, et les surfaces frottantes (44) des disques coniques (24-27) et les faces extrêmes (43) des pièces à bascule (32, 33) présentant des bombements dirigés l'un vers l'autre et correspondant à un profil arqué, caractérisée en ce que,
partant d'une ligne de face extrême (49, 53) parallèle à la direction de circulation de la chaîne, ligne qui se trouve à peu près à la hauteur radiale de la position correspondant au rapport de transmission de 1:1, les autres lignes de face extrême (54), s'y raccordant radialement vers l'extérieur et décrivant la face extrême (43) courbée dans l'espace des pièces à bascule (32, 33), sont inclinées dans une mesure croissante, autour de leur point d'intersection avec la surface à bascule (41, 42), d'un angle ϑ, en direction du disque conique coordonné.

2. Chaîne articulée à plaques selon la revendication 1, caractérisée en ce que l'inclinaison commence à partir de 0 et augmente radialement vers l'extérieur jusqu'à une valeur d'environ 2°.

3. Chaîne articulée à plaques selon la revendication 1 ou 2, caractérisée en ce que, partant d'une ligne de face extrême (49, 53) parallèle à la direction de circulation de la chaîne et située à peu près à la hauteur radiale de la position correspondant au rapport de transmission de 1:1, les autres lignes de face extrême (55), s'y raccordant radialement vers l'intérieur et décrivant la face extrême (43) courbée dans l'espace, sont inclinées dans une mesure croissante, autour de leur point d'intersection avec la surface à bascule (41, 42), d'un angle ϑ, dans le sens de l'éloignement du disque conique coordonné.

4. Chaîne articulée à plaques selon la revendication 3, caractérisée en ce que l'inclinaison commence à partir de 0 et augmente radialement vers l'intérieur jusqu'à une valeur d'environ 2°.

5. Chaîne articulée à plaques selon la revendication 1, caractérisée en ce que les surfaces à bascule (41, 42) des pièces à bascule (32, 33) ont une forme essentiellement convexe.

6. Chaîne articulée à plaques selon la revendication 1, caractérisée en ce que le dispositif de blocage en rotation (35, 36 respectivement 37, 38) est réalisé par coopération de profils.
